# EUROPÄISCHE PATENTSCHRIFT

(11) **EP 0 756 221 B1**
(45) Veröffentlichungstag und Bekanntmachung des Hinweises auf die Patenterteilung: **06.03.2002**
(21) Anmeldenummer: 96111251.3
(22) Anmeldetag: 12.07.1996
(51) Int. Cl.: G05F 1/45, B60M 3/02, B60L 3/00

(54) **Vorrichtung und Verfahren zur Spannungsregelung in Stromkreisen für Transportfahrzeuge**
Method and apparatus for controlling the tension in circuits for transport vehicles
Procédé et appareil pour régler la tension dans des circuits pour véhicules de transport

(30) Priorität: 21.07.1995 IT MI951585
(43) Veröffentlichungstag der Anmeldung: 29.01.1997
(73) Patentinhaber: ABB Daimler-Benz Transportation (Italia) S.p.A., 20090 Segrate (IT)
(72) Erfinder: Framba, Bruno, 20060 Gessate (IT)
(74) Vertreter: Cohausz & Florack Patentanwälte

(56) Entgegenhaltungen:
- EP-A- 0 383 971
- EP-A- 0 657 321
- SCHLAEPFER P: "DIE ELEKTRISCHE UNIVERSALLOKOMOTIVE BAUREIHE 460 DER SCHWEIZERISCHEN BUNDESBAHNEN" ELEKTRISCHE BAHNEN, Bd. 90, Nr. 9, 1.September 1992, Seiten 279-287, XP000301287

## Beschreibung

Die Erfindung betrifft eine Vorrichtung zur Spannungsregelung in Stromkreisen für Transportfahrzeuge, insbesondere für schienengebundene Verkehrsmittel.

Um den in Eisenbahn- und ähnlichen Triebwagen eingebauten Elektromotoren Strom zuzuführen, werden Stromkreise verwendet, die die elektrische Leitungsgleichspannung in zwei Teilspannungen aufteilen und einer entsprechenden Anzahl von Wandlern der Gleichstrom-/Wechselstrom-Bauart Strom zuführen. Bei Ausfall eines der beiden Wandler, zum Beispiel aufgrund einer Störung, können an den zweiten Wandler keine Steuerimpulse mehr geleitet werden und das ganze System muss ausser Betrieb gesetzt werden, da die Gefahr besteht, dass die ganze Leitungsspannung an einen einzigen Kondensator angelegt wird und dadurch die mit dem Kondensator verbundenen Ventile beschädigt werden. Stromkreise dieser Art wurden von der Firma Asea Brown Boveri hergestellt.

Der Erfindung liegt die Aufgabe zugrunde, die Grenzen und die Nachteile der bisherigen Technik insbesondere dadurch zu überwinden, dass eine Vorrichtung zur Spannungsregelung geschaffen wird, die den Betrieb auch nur eines einzigen Wandlers erlaubt, wobei an demselben Wandler eine Spannung angelegt wird, die im wesentlich der Hälfte der Leitungsspannung entspricht oder zumindest einen für den arbeitenden Wandler angemessenen Wert aufweist und dass Kontrolleinrichtungen sowie Leistungsgeräte zur Anwendung kommen, die insbesondere zur Leistungsdissipation während eines Bremsvorganges vorgesehen sind, wenn diese elektrische Leistung nicht zur Leitung zurückgeleitet werden kann.

Diese Aufgaben werden durch die Erfindung dadurch gelöst, dass eine Spannungsregelvorrichtung vorgeschlagen wird, die bei Störung oder Ausfall des einen der beiden, in einem Stromkreis für die elektrischen Antriebsmotoren in Reihe geschalteten Wandler zur Anwendung kommen kann, wobei dieser Stromkreis für jeden Wandler Stromzuführungsmittel aufweist, die jeweils aus einem Leistungszweig besteht, der von einem Regelwiderstand gebildet ist, der mit einem, die zur Kontrollelektrode geleiteten Steuerimpulse empfangenden Ventil in Reihe geschaltet ist, und einen zum Leistungszweig parallelgeschalteten Kondensator aufweist und dadurch gekennzeichnet, dass die Regelvorrichtung Mittel zum selektiven Anlegen von Steuerimpulsen an der Kontrollelektrode des dem arbeitenden Wandler zugeordneten Ventils aufweist und, wobei die Dauer oder die Breite dieser Steuerimpulse mit der Differenz oder der Abweichung zwischen der, an den Enden des nicht arbeitenden Wandlers anstehenden Spannung und einer Referenzspannung in zeitlichem Verhältnis stehen, um an den Wandlerenden eine für dessen Betrieb geeignete Spannung zur Verfügung zu stellen.

In einer weiteren Ausführungsform schlägt die Erfindung ein Verfahren zur Regelung der Spannung an den Enden des nicht arbeitenden Wandlers sowie einer Referenzspannung vor, um an den Wandlerenden eine für dessen Betrieb geeignete Spannung zur Verfügung zu haben.

Weiterhin schlägt die Erfindung ein Verfahren zur Regelung der Spannung an den Enden eines elektrischen Wandlers in einem zwei Wandler aufweisenden Stromkreis für die Speisung von Antriebsmotoren vor, wobei im Fall einer Störung oder bei Ausfall eines der beiden Wandler folgende Verfahrensschritte vorgesehen sind:
a) Ermittlung des fehlerhaften Zustandes eines der beiden Wandler,
b) Berechnung eines zur Differenz zwischen der an den Enden des arbeitenden Wandlers anstehenden Spannung und einer Referenzspannung proportionalen Wertes,
c) Erzeugung von Impulsen, deren Dauer dem Wert der Differenz proportional ist,
d) Anlegen der Impulse an den Stromkreis des arbeitenden Wandlers, um an den Enden des Wandlers eine für seinen Betrieb geeignete Spannung zur Verfügung zu stellen.

Weitere vorteilhafte Merkmale der Erfindung sind Gegenstand der Unteransprüche.

Die Erfindung wird nachstehend anhand der beiliegenden Zeichnungen näher beschrieben, und anhand von Ausführungsbeispielen der Erfindung dargestellt.

Es zeigen:
Figur 1 eine schematische Ansicht eines bekannten Stromkreises für einen Elektromotor, der zu Antriebszwecken verwendet wird;
Figur 2 eine schematische Ansicht einer erfindungsgemässen Regelvorrichtung;
Figur 3 ein Blockschaltbild eines erfindungsgemäss ausgeführten Reglers; und
Figur 4 die Wellenformen der Kontrollsignale fuer ein Anwendungsbeispiel.

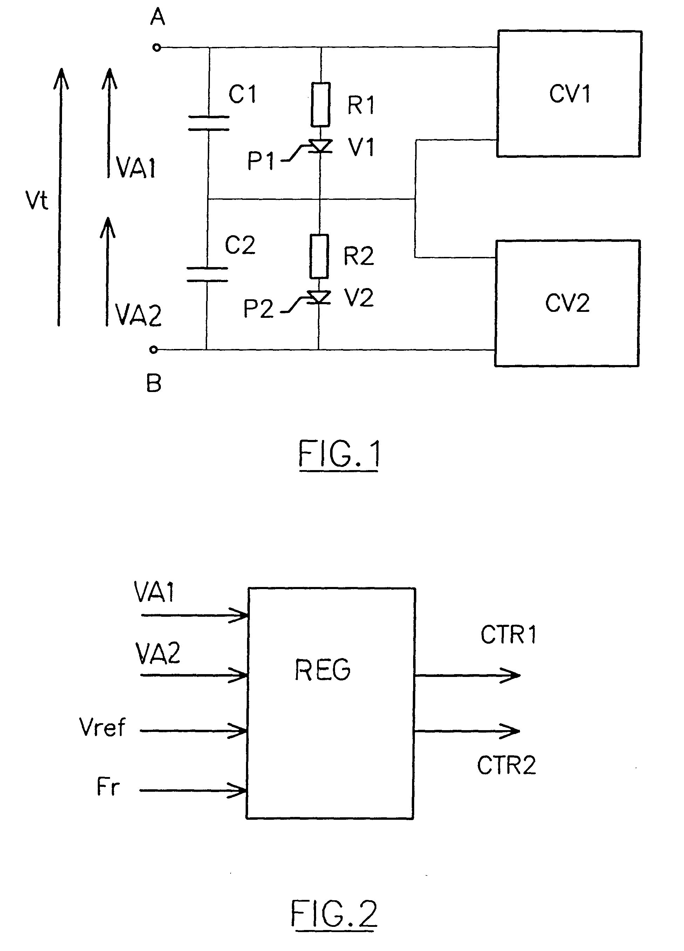

Figur 1 zeigt eine schematische Ansicht eines bekannten Stromkreises für Elektromotoren, insbesondere für Elektromotoren, die in einer Elektrolok zum Einsatz kommen. Der Stromkreis weist zwei Kondensatoren C1 und C2 auf, die zwischen den Klemmen A und B in Reihe geschaltet sind und zu den Wandlern Inversern CV1 und CV2 sowie zu den Regelwiderständen R1 und R2 parallelgeschaltet sind, die somit mit den zugeordneten Ventilen V1 und V2 in Reihe geschaltet sind.

Die Ventile V1 und V2, zum Beispiel des Typs SCR, GTO oder andere, gleichwertige elektronisch gesteuerte Vorrichtungen, empfangen die Steuerimpulse P1 und P2 an den entsprechenden Elektroden.

Wenn an den Klemmen A und B eine Versorgungsgleichspannung Vt liegt, wird diese Spannung in zwei Teilspannungen VA1 und VA2 aufgeteilt, die einander gleich sind. Bei normalem Betriebszustand arbeiten beide Wandler CV1 und CV2, die eine gleiche (nicht dargestellte) Last, zum Beispiel elektrische Antriebsmotoren, versorgen. Die an den Kondensatoren anliegenden Spannungen VA1 und VA2 sind im wesentlichen gleich; Sonderzustände bleiben hier unberücksichtigt.

Das Gleichgewicht der Spannungen ist dadurch gesichert, dass die von den Kondensatoren aufgenommenen Leistungen gleich sind. Neigt eine der beiden Teilspannungen VA1 und VA2 zu einer Zunahme, so nimmt auch die Leistung des angeschlossenen Wandlers zu und der Betrieb wird dadurch stabilisiert.

Ein Ausfall eines der beiden Wandler, zum Beispiel aufgrund einer Störung, würde verursachen, dass im Wandler kein Strom fliessen würde und es wäre daher nicht möglich, Steuerimpulse für den zweiten Wandler zuzuführen, da in einem Kondensator kein Gleichstrom fliessen kann.

Ausserdem würde zwischen den an den beiden Kondensatoren C1 und C2 anliegenden Spannungen kein Gleichgewicht mehr vorherrschen, weil die gesamte, mit Vt bezeichnete Spannung, den Kondensator beeinflussen würde, für den die aus dem ausgefallenen Wandler gebildete Last ausbleibt. Dies verhindert nicht nur die Funktion des noch arbeitenden Wandlers, sondern ist auch für das dem unbelasteten Kondensator zugeordnete Ventil V1 oder V2 äusserst gefährlich.

Bei einer Leitung von 3kV ist es nämlich nicht möglich, die volle Spannung an ein einziges Ventil anzulegen und anderseits sind zur Reihenschaltung mehrerer Ventile Bauelemente erforderlich, die nur über aufwendige und teuere Auswahl zur Verfügung gestellt werden können.

Nach der herkömmlichen Technik, die im Schaltbild nach Figur 1 dargestellt ist, ist es daher bei Ausfall eines Wandlers, zum Beispiel infolge einer Störung, erforderlich, auch den zweiten Wandler ausser Betrieb zu setzen.

Während des normalen Betriebs werden die beiden Ventile V1 und V2 durch Impulse gesteuert, im wesentlichen um zur Herabsetzung von Überspannungen in den Regelwiderständen R1 und R2 Energie zu dissipieren bzw. um Spannungsoberwellen an den Enden der Kondensatoren C1 und C2 zu dämpfen. Die Ventile V1 und V2 erfüllen daher im wesentlichen die Aufgabe, die Spannung an den Enden der Kondensatoren und daher an den entsprechenden Wandlern CV1 und CV2 zu regeln.

Die Erfindung sieht eine weitere Arbeitsweise vor, die nachstehend beschrieben wird.

Werden an die beiden Ventilen angemessene Kontrollimpulse P1', P2' geleitet, so kann eine Teilspannung (VA1 oder VA2) auf einem bestimmten Regelwert gehalten werden, während die andere Teilspannung von der am gesamten Stromkreis angelegten Spannung abhängig ist.

Bei Ausfall eines der beiden Wandler, ist es möglich, die an den Enden des noch arbeitenden Wandlers angelegte Spannung zu regeln. Dazu werden die Spannungswerte VA1 und VA2 ermittelt und das diametral entgegengesetze Ventil wird mit Impulsen angesteuert, die vom Wert der gewünschten Spannung abhängig sind.

In vorteilhafter Weise wird das erfindungsgemässe Verfahren durch Anwendung von bereits bestehenden Funktionseinheiten durchgeführt, und zwar insbesondere über eine Kontrollelektronik der Wandler und mittels Geräten, die zur elektrischen Bremsung dienen.

Figur 2 zeigt ein Prinzip-Blockschaltbild der erfindungsgemässen Vorrichtung. Wie in der Zeichnung dargestellt ist, werden am Eingang einer Vorrichtung REG die Spannungen VA1 und VA2 zusammen mit einer Referenzspannung Vref und einem, der gewünschten Funktion entsprechenden Signal Fr empfangen. Die Regelvorrichtung gibt an ihren beiden Ausgängen mit CTR1 und CTR2 bezeichnete Signale aus, die zum Steuern oder Einschalten der Ventile V1 und V2 dienen und jeweils von den Werten der am Eingang anliegenden Spannungen VA1 und VA2 abhängig sind.

Fällt zum Beispiel der Wandler CV1 aus und sind die Ventile für keine anderen Funktionen des Reglers eingeschaltet, so kann die Spannung VA2 durch entsprechendes Einschalten des Ventils V1 geregelt werden, welches wie eine Drosseleinheit oder ein Chopper mit Impulsen gesteuert wird, die einen, von dem zur Regelung des Spannung VA2 eingestellten Wert Vref abhängigen Arbeitsablauf (Duty Cycle) auslösen.

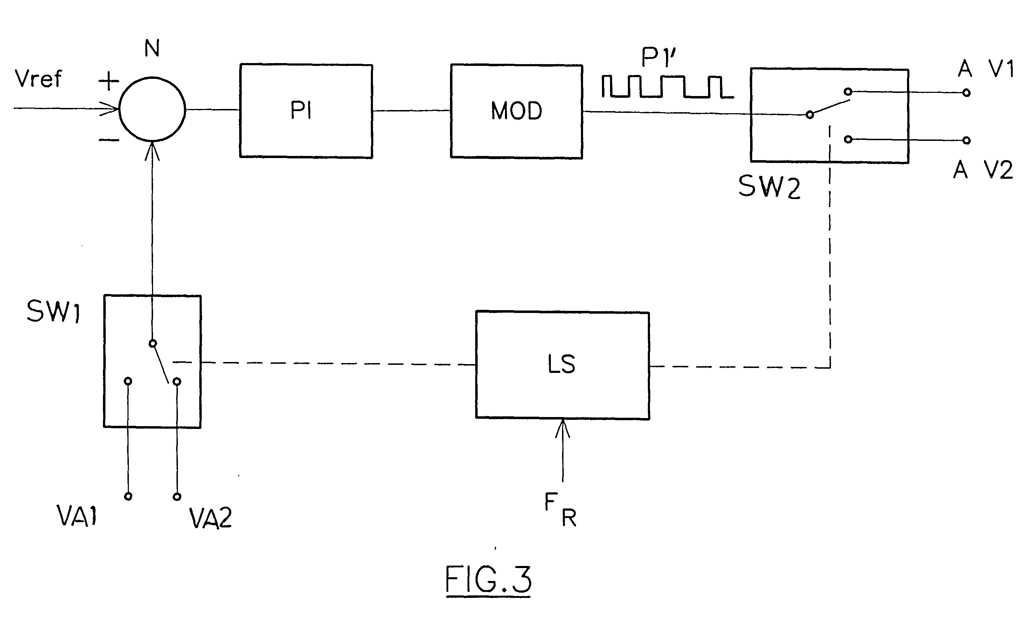

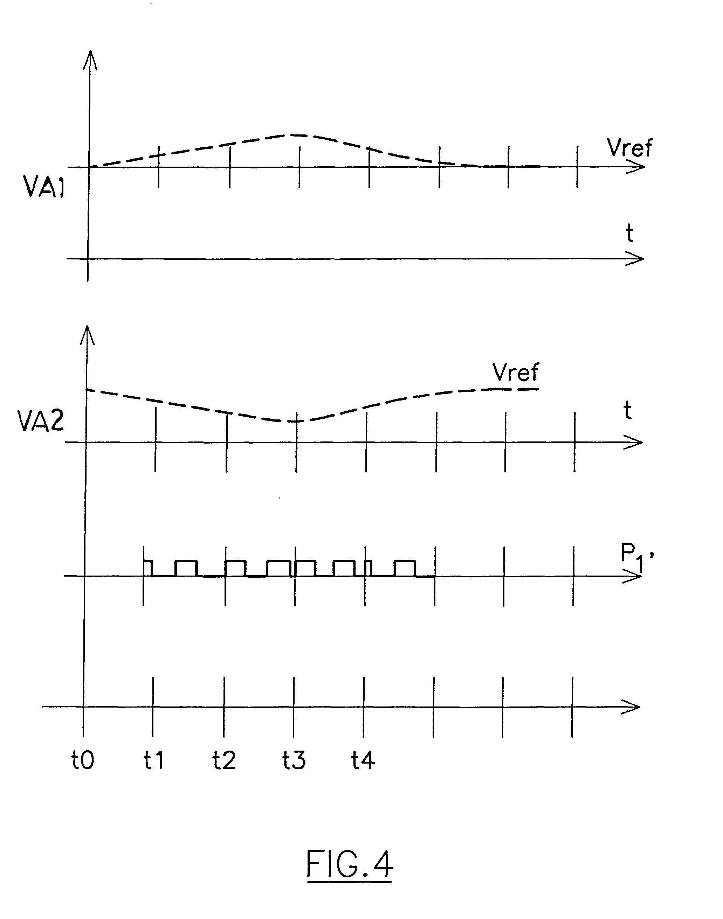

Anhand der Figuren 3 und 4 wird nun Aufbau und Arbeitsweise einer erfindungsgemässen Vorrichtung näher beschrieben.

Figur 3 stellt eine bevorzugte Ausführungsform dar, bei der die erfindungsgemässe Vorrichtung eine Subtraktionsschaltung oder einen Subtraktionsknoten N aufweist, der zum Beispiel mittels eines Operationsverstärkers hergestellt ist, der an dem einen Eingang eine Referenzspannung Vref und an dem anderen Eingang eine der beiden, an den Enden der beiden Wandler CV1 oder CV2 anliegenden Spannungen VA1 oder VA2, empfängt. Insbesondere handelt es sich um eine Schalteinrichtung SW1, vorzugsweise in Festkörperbauweise, die beide Spannungen VA1, VA2 am Eingang empfängt, die Spannung (VA2, in dem hier betrachteten Fall) des arbeitsfähigen Wandlers auswählt und zum Subtraktionsknoten leitet. In vorteilhafter Weise ist die Schalteinrichtung SW1 durch eine Schaltung LS gesteuert, die zur Ausführung der Auswahllogik über ein, den Ausfall des einen der beiden Wandler anzeigenden Signales (FR) angesteuert wird.

Ein Integrator PI (Proportional-Integral-Regler) ist mit dem Ausgang des Subtraktionsknotens N verbunden und speist an seinem Ausgang einen Modulator der Impulsbreite MOD, der einen Zug von Impulsen P1' erzeugt. Der Modulator ist mit einer zweiten Schalteinrichtung SW2 verbunden, die ebenfalls durch die Auswahllogik LS gesteuert wird und diese Impulse zum Spannungsregelventil (V1, in dem hier betrachteten Fall) leitet.

Figur 4 zeigt die Arbeitsweise der Vorrichtung. Ausgehend von der Zeit (t0), nimmt die Spannung VA1 aufgrund der am Wandler ausbleibenden Last zu und daher nimmt die Spannung VA2 ab. Dann werden über CTR1 (mit P1' bezeichnete) Ansteuerimpulse ausgegeben, deren Breite oder Dauer (zum Beispiel während der Zeit t1) der Differenz (VA2 - Vref) zwischen der an den Enden des arbeitenden Wandlers anliegenden Spannung und der Referenzspannung Vref proportional sind. Während der Zeit (t2) ist aufgrund eines Fehlers oder einer Abweichung, der/die grösser als der Referenzwert ist, die Breite derselben Impulse entsprechend grösser. Während der Zeit (t3) beginnt die Korrektur wirksam zu werden, da der Fehler bzw. die Abweichung kleiner wird und die Impulse allmählich enger (kürzer) werden und sich schliesslich aufheben.

Dank dem hohen Gewinn an Regelstrecke erfolgt das Verfahren gesamthaft mit einem Minimum an Fehlern.

Erfindungsgemäss werden daher an der Kontrollelektrode des dem arbeitenden Wandler gegenüberliegenden Ventils Steuerimpulse (P1') angelegt, deren Dauer oder Breite mit dem Unterschied oder der Abweichung zwischen der an den Enden des arbeitenden Wandlers anliegenden Spannung und einer Referenzspannung in zeitlichem Verhältnis stehen, damit an den Enden des arbeitenden Wandlers eine gegenüber Vt zweckmässig herabgesetzte Spannung zur Verfügung steht. Die Arbeitsweise der erfindungsgemässen Vorrichtung wurde an Hand des Beispiels eines Ausfalles des Wandlers CV1 beschrieben, es versteht sich jedoch von selbst, dass bei einem Ausfall des Wandlers CV2, die Vorrichtung in der Lage ist, genau auf dieselbe Art und Weise anzusprechen.

## Patentansprüche

1. Vorrichtung zur Spannungsregelung bei Störungen oder bei Ausfall eines von zwei Wandlern (CV1, CV2), die in einem Stromkreis für Elektromotoren zum Antrieb von Transportfahrzeugen in Reihe geschaltet sind, wobei dieser Stromkreis für jeden Wandler Stromzuführungsmittel aufweist, die jeweils aus einem Zweig bestehen, der aus einem Regelwiderstand (R1, R2) gebildet ist, der mit einem, die zur Kontrollelektrode geleiteten Steuerimpulse (P1',P2') empfangenden Ventil (V1, V2) in Reihe geschaltet ist, und einen zu diesem Zweig parallel geschalteten Kondensator (C1, C2) aufweist, **dadurch gekennzeichnet, dass** die Regelvorrichtung Mittel zum selektiven Anlegen von Steuerimpulsen (P1' oder P2') an der Kontrollelektrode des Ventils (V1 oder V2) im dem, dem arbeitenden Wandler (CV2 oder CV1) gegenüberliegenden Zweig aufweist, wobei die zeitliche Dauer oder die Breite der Steuerimpulse, der Differenz oder der Abweichung zwischen der an den Enden des arbeitenden Wandlers anliegenden Spannung (VA2 oder VA1) und einer Referenzspannung (Vref) proportional ist, und den Enden des Wandlers (CV2 oder CV1) eine für seinen Betrieb geeignete Spannung zur Verfügung steht.

2. Vorrichtung, nach Anspruch 1, **dadurch gekennzeichnet, dass** die Spannung auf einen unterhalb der Spannung (Vt) der Versorgungsleitung liegenden Wert einregelbar ist.

3. Vorrichtung, nach Anspruch 1 oder 2, **dadurch gekennzeichnet, dass** folgende Bauelemente vorgesehen sind:
a) eine Subtraktionsschaltung oder ein Subtraktionsknoten (N), der an einem Eingang die Referenzspannung (Vref) und an dem anderen Eingang eine der beiden an den Enden der beiden Wandler (CV1, CV2) liegenden Spannungen (VA1, VA2) empfängt,
b) ein mit dem Ausgang des Subtraktionsknotens (N) verbundenen S-Regler (PI),
c) ein Impulsbreiten-Modulator (MOD), dessen Eingang mit einem Integrator (PI) verbunden ist,
d) erste Schaltmittel (SW1), die die an den Enden der beiden Wandler anliegenden beiden Spannungen (VA1, VA2) am Eingang empfangen und am Ausgang nur eine der Spannungen abgeben,
e) zweite Schaltmittel (SW2), die den Ausgangswert des Impulsbreiten-Modulators (MOD) an ihrem Eingang empfangen und mit der Kontrollelektrode des einen der beiden Ventile (V1, V2) selektiv verbinden und
f) eine logische Auswahlschaltung, die über ein, die Störung des einen der beiden Wandler (CV1, CV2) anzeigenden Signales (FR) kontrolliert wird, und die ersten und zweiten Schaltmittel (SW1, SW2) steuert.

4. Verfahren zur Regelung der Spannung an den Enden eines Wandlers (CV1, CV2) in einem Stromkreis für Elektromotoren zum Antrieb von Transportfahrzeugen, der zwei Wandler aufweist, wobei im Fall einer Störung oder bei einem Ausfall eines der beiden Wandler (CV1, CV2) folgende Verfahrensschritte eingeleitet werden:
a) Ermittlung des fehlerhaften Zustandes (FR) eines der beiden Wandler (CV1, CV2),
b) Berechnung eines, der Differenz zwischen der an den Enden des arbeitenden Wandlers anliegenden Spannung (VA1 oder VA2) und einer Referenzspannung (Vref) proportionalen Wertes,
c) Erzeugung von Impulsen, deren Dauer dem Differenzwert proportional ist,
d) Anlegen der in c) erzeugten Impulse am Stromkreis des arbeitenden Wandlers (CV1), um den Enden des Wandlers (CV1) eine für seinen Betrieb geeignete Spannung zur Verfügung zu stellen.

## Claims

1. Apparatus for voltage regulation in the event of defects or in the event of failure of one of two converters (CV1, CV2) which are connected in series in a circuit for electric motors for driving transport vehicles, with this circuit having power supply means for each converter, which power supply means each comprise one branch which is formed from a regulation resistor (R1, R2) and is connected in series with an active device (V1, V2) which receives the control pulses (P1', P2') passed to the control electrode, and has a capacitor (C1, C2) connected in parallel with this branch, **characterized in that** the regulation apparatus has means for selectively applying control pulses (P1' or P2') to the control electrode of the active device (V1 or V2) in the branch opposite the operating converter (CV2 or CV1), with the time duration or the width of the control pulses being proportional to the difference or the error between the voltage (VA2 or VA1) applied to the ends of the operating converter and a reference voltage (Vref), and a voltage which is suitable for its operation being available to the ends of the converter (CV2 or CV1).

2. Apparatus according to Claim 1, **characterized in that** the voltage can be regulated to a value which is less than the voltage (Vt) on the supply line.

3. Apparatus according to Claim 1 or 2,
**characterized in that** the following components are provided:
a) a subtraction circuit or a subtraction node (N), which receives the reference voltage (Vref) at one input and receives one of the two voltages (VA1, VA2) which are present at the ends of the two converters (CV1, CV2) at the other input,
b) an S-regulator (PI) which is connected to the output of the subtraction node (N),
c) a pulse width modulator (MOD) whose input is connected to an integrator (PI),
d) first switching means (SW1) which receive the two voltages (VA1, VA2) which are present at the ends of the two converters at the input, and which emit only one of the voltages at the output,
e) second switching means (SW2) which receive the output value of the pulse width modulator (MOD) at their input and selectively connect it to the control electrode of one of the two active devices (V1, V2), and
f) a logic selection circuit which is controlled via a signal (FR) which indicates the defect in one of the two converters (CV1, CV2) and controls the first and second switching means (SW1, SW2).

4. Method for regulating the voltage at the ends of a converter (CV1, CV2) in a circuit for electric motors for driving transport vehicles, which has two converters, with the following method steps being initiated in the event of a defect or in the event of a failure of one of the two converters (CV1, CV2):
a) determination of the fault state (FR) of one of the two converters (CV1, CV2),
b) calculation of a value which is proportional to the difference between the voltage (VA1 or VA2) which is present at the ends of the operating converter and a reference voltage (Vref),
c) production of pulses whose duration is proportional to the difference value,
d) application of the pulses produced in c) to the circuit of the operating converter (CV1), in order to make available a voltage which is suitable for its operation to the ends of the converter (CV1).

## Revendications

1. Dispositif de régulation de la tension en cas de perturbations ou de défaillance de l'un parmi deux convertisseurs (CV1, CV2) qui sont branchés en série dans un circuit de courant de moteurs électriques pour l'entraînement de véhicules de transport, ce circuit de courant présentant pour chaque convertisseur des moyens d'apport de courant qui sont chacun constitués d'une branche qui est formée d'une résistance de régulation (R1, R2), laquelle est branchée en série sur une valve (V1, V2) recevant les impulsions de commande (P1', P2') amenées à l'électrode de commande, et présente un condensateur (C1, C2) branché en parallèle par rapport à cette branche, **caractérisé en ce que** le dispositif de régulation présente des moyens pour l'application sélective d'impulsions de commande (P1' ou P2') sur l'électrode de commande de la valve (V1 ou V2) dans la branche faisant face au convertisseur (CV2 ou CV1) en fonctionnement, la durée temporelle ou la largeur des impulsions de commande étant proportionnelle à la différence ou à l'écart entre la tension (VA2 ou VA1) appliquée aux bornes du convertisseur en fonctionnement et une tension de référence (Vref), et une tension appropriée au fonctionnement du convertisseur (CV2 ou CV1) est disponible pour les bornes de ce convertisseur.

2. Dispositif selon la revendication 1, **caractérisé en ce que** la tension peut être régulée à une valeur située en dessous de la tension (Vt) du conducteur d'alimentation.

3. Dispositif selon la revendication 1 ou 2, **caractérisé en ce que** les composants suivants sont prévus :
a) un circuit de soustraction ou un noeud de soustraction (N) qui reçoit sur une entrée la tension de référence (Vref) et sur l'autre entrée l'une des deux tensions (VA1, VA2) appliquées aux bornes des deux convertisseurs (CV1, CV2),
b) un régulateur (PI) S relié à la sortie du noeud de soustraction (N),
c) un modulateur (MOD) de largeur d'impulsion dont l'entrée est reliée à un intégrateur (PI),
d) des premiers moyens de commutation (SW1) qui reçoivent sur leur entrée les deux tensions (VA1, VA2) appliquées aux bornes des deux convertisseurs et délivrent sur leur sortie une seule des tensions,
e) des deuxièmes moyens de commutation (SW2) qui reçoivent sur leur entrée la valeur de sortie du modulateur de largeur d'impulsion (MOD) et se joignent sélectivement à l'électrode de commande de l'une des deux valves (V1, V2), et
f) un circuit de sélection logique qui est commandé par l'intermédiaire d'un signal (FR) indiquant la perturbation de l'un des deux convertisseurs (CV1, CV2), et commande les premiers et les deuxièmes moyens de commutation (SW1, SW2).

4. Procédé de régulation de la tension aux bornes d'un convertisseur (CV1, CV2) dans un circuit de courant de moteurs électriques pour l'entraînement de véhicules de transport qui présente deux convertisseurs, dans lequel, en cas de perturbation ou de défaillance de l'un des deux convertisseurs (CV1, CV2), les étapes de procédé suivantes sont exécutées :
a) détermination de l'état défectueux (FR) de l'un des deux convertisseurs (CV1, CV2),
b) calcul d'une valeur proportionnelle à la différence entre la tension (VA1 ou VA2) appliquée aux bornes du convertisseur en fonctionnement et une tension de référence (Vref),
c) création d'impulsions dont la durée est proportionnelle à la valeur de la différence,
d) application des impulsions créées en c) dans le circuit de courant du convertisseur (CV1) en fonctionnement, pour mettre à disposition des bornes du convertisseur (CV1) une tension qui convient à son fonctionnement.
